# FASCICULE DE BREVET EUROPEEN

(11) **EP 2 261 102 B1**
(45) Date de publication et mention de la délivrance du brevet: **07.08.2019**
(21) Numéro de dépôt: 10165284.0
(22) Date de dépôt: 08.06.2010
(51) Int. Cl.: B62D 21/15, B62D 25/08, B62D 25/12, B60R 19/18, B60R 19/12

(54) **ABSORBEUR MULTI-CHOCS EN FACE AVANT DE VEHICULE.**
AUFPRALLABFANGENDES MEHRZWECKTEIL EINER FAHRZEUGFRONT
MULTIPURPOSE IMPACT ENERGY ABSORBING ELEMENT FOR A VEHICLE FRONT

(30) Priorité: 08.06.2009 FR 0953783
(43) Date de publication de la demande: 15.12.2010
(73) Titulaire: COMPAGNIE PLASTIC OMNIUM, 69007 Lyon (FR)
(72) Inventeur: Ginja, Stéphane, 01500 Amberieu en Bugey (FR)
(74) Mandataire: Remy, Vincent Noel Paul

(56) Documents cités:
- EP-A1- 1 293 389
- EP-A1- 1 595 755
- DE-A1- 10 042 560
- DE-A1-102004 008 740
- FR-A1- 2 880 319
- FR-A1- 2 884 201
- FR-A1- 2 897 812
- FR-A1- 2 911 558

## Description

La présente invention concerne le traitement par un véhicule des chocs auxquels il est soumis.

On connaît dans l'état de la technique des absorbeurs pour véhicule destinés à être placé en regard d'une poutre de chocs avant ou arrière du véhicule s'étendant selon la direction transversale du véhicule, en avant de celle-ci lorsque la poutre est située derrière la peau de pare-chocs avant du véhicule. De cette façon, l'absorbeur est intercalé entre la poutre et la peau de pare-chocs. De tels absorbeurs peuvent également être placés sur la poutre arrière du véhicule.

Un absorbeur de chocs est soumis à de nombreuses exigences en matière de chocs, spécifiques à chaque pays ou région. Certains organismes, comme le RCAR (acronyme anglais pour « Research Council for Automobile Repair »), mettent en place des tests d'absorption normalisés afin d'étudier l'efficacité d'un absorbeur dans le cas de chocs dits « chocs assurance » . Ces tests visent à mesurer le coût des réparations lors d'impacts à basse vitesse (moins de 16 km/h).

Le RCAR a relevé que, lorsqu'un absorbeur d'un véhicule automobile ne se comporte pas de manière adéquate lors d'un choc entre deux véhicules automobiles, la poutre de choc (avant ou arrière) de l'un des véhicules passe généralement au-dessus ou en-dessous de la poutre de choc (avant ou arrière) de l'autre véhicule, ce qui crée des dommages importants au moins pour l'un des deux véhicules. Ces tests ont été effectués jusqu'ici avec une barrière rigide simulant un obstacle. Or, la trop grande rigidité de la barrière rend mal compte des dégâts causés par les chocs entre deux véhicules où le fait que la partie avant ou l'arrière des deux véhicules soit déformable entraîne des dégâts plus importants que lors des tests.

L'IIHS (acronyme anglais pour « Insurance Institute for Highway Safety »), membre du RCAR, a donc récemment mis en place un test d'absorption utilisant un obstacle déformable, par exemple un absorbeur déformable (« IIHS Deformable barrier Test »), visant à déterminer si l'ensemble poutre de choc/absorbeur d'un véhicule permet d'éviter les dommages au-dessus ou en-dessous de la poutre de choc en cas d'impact à basse vitesse (inférieure à 16 km/h). Un tel test d'absorption est plus particulièrement désigné « RCAR bumper test ».

Ce test d'absorption permet notamment de vérifier :
- si la géométrie de la poutre de choc (avant ou arrière) du véhicule permet un recouvrement suffisant avec la poutre de choc (avant ou arrière) d'un autre véhicule avec lequel il rentre en collision,
- si l'ensemble poutre de choc/absorbeur est suffisamment stable par rapport à l'autre véhicule au cours du choc, et enfin
- si l'ensemble poutre de choc/absorbeur présente des propriétés d'absorption de chocs suffisantes pour absorber à lui seul l'énergie du choc.

Si ces critères sont satisfaits, le nombre de pièces à remplacer sur le véhicule automobile après le choc est limité, idéalement à la peau de pare-chocs, à l'absorbeur et à la poutre de choc ayant subit le choc.

Pour simuler la partie avant ou arrière du véhicule tiers impliqué dans le choc, ce test d'absorption utilise une barrière de simulation destinée à rentrer en contact avec le véhicule testé. Cette barrière comprend une partie rigide et une partie déformable de simulation et est positionnée à une hauteur donnée par rapport au sol. Les dimensions d'une telle barrière sont standardisées en fonction du test d'absorption normalisé.

Lors d'un test avec barrière déformable, et lorsque la hauteur de la poutre du véhicule ne correspond pas à la hauteur de la barrière, ce qui est le cas de certains véhicules, la barrière passe au-dessus ou en-dessous de la poutre de choc (avant ou arrière) du véhicule, ce qui cause des dommages importants à ce véhicule.

Cela peut notamment être le cas pour les véhicules dont la partie avant ou arrière est abaissée par rapport aux véhicules classiques de type berlines, comme les véhicules de type coupés, où le risque de détériorer le capot et les optiques est accru par rapport aux véhicules plus classiques, ainsi que pour les véhicules dont l'avant est surélevé par rapport aux véhicules classiques de type berlines, comme pour les véhicules de type 4x4.

Le document DE 100 42 560 A1 décrit un pare-chocs de véhicule automobile comprenant un absorbeur de chocs selon le préambule de la revendication 1.

L'invention a notamment pour but de remédier à cet inconvénient en proposant un absorbeur permettant au véhicule de remplir le cahier des charges des constructeurs pour les chocs de type « RCAR bumper test » ainsi que pour les chocs piéton ou urbains sans pour autant augmenter de façon considérable les coûts de fabrication du système d'absorption des chocs.

A cet effet, l'invention a pour objet un absorbeur de choc pour véhicule selon la revendication 1.

Un tel absorbeur comprend deux portions : la première portion, destinée à être placée en regard de la poutre pour répondre à un choc tel que le choc piéton ou un choc urbain, et la deuxième portion, destinée à être placée de façon décalée relativement à la poutre permettant de répondre, en association avec la première portion, à un choc tel qu'un choc contre une barrière. Cette deuxième portion pourrait être placée au-dessus ou en-dessous de la poutre selon la configuration du véhicule et sa hauteur par rapport à la hauteur réglementaire de la barrière du choc. En général, elle est agencée au-dessus de la poutre pour un véhicule de type coupé ou en-dessous de la poutre pour un véhicule de type 4*4. On notera qu'un tel absorbeur peut être placé à l'avant ou à l'arrière du véhicule.

Les première et deuxième portions peuvent être conformées indépendamment l'une de l'autre au niveau de leur forme ou de leurs dimensions pour être adaptées au type de choc auxquels elles doivent en particulier répondre. La deuxième portion peut être conformée pour être plus rigide, de préférence deux fois plus rigide, que la première portion de façon à pallier à l'absence de poutre en regard de celle-ci. Cette rigidité est atteinte notamment grâce aux parois de renfort et la rigidité désirée peut être atteinte en faisant varier la répartition et la densité des parois de renfort.

L'orientation des parois de renfort de la deuxième portion , normales à la direction longitudinale de l'absorbeur, et le fait qu'elles soient reliées entre elles permet d'assurer une bonne réponse de la deuxième portion de l'absorbeur, une fois celui-ci monté sur le véhicule, au choc du véhicule contre la barrière. En outre, le fait que la deuxième portion soit en appui contre la poutre par l'intermédiaire de la deuxième paroi de support permet à celle-ci de s'appuyer sur la poutre, ce qui engendre également une meilleure réponse au choc du véhicule. En effet, la poutre reprend ainsi une partie des efforts subis par la deuxième portion de l'absorbeur lors d'un choc contre une barrière.

De ce fait, du fait de la deuxième portion, on évite que la poutre de choc passe au-dessus ou au-dessous de la barrière, occasionnant d'importants dommages au véhicule.

Ainsi, un tel absorbeur permet de répondre aux différents types de choc, choc piéton, choc urbain et choc de type « RCAR bumper test », sans pour autant être complexe à fabriquer, la diversité des formes et des dimensions des première et deuxième portions pouvant être facilement gérées grâce aux techniques connues de moulage.

Il permet donc d'assurer une bonne tenue du véhicule en réponse aux chocs sans pour autant augmenter considérablement les coûts de fabrication du système d'absorption des chocs. Il permet en effet d'éviter de modifier la structure du véhicule en modifiant la position de la poutre relativement aux autres éléments du véhicule et également d'augmenter la hauteur de la poutre, ce qui augmenterait également la masse et donc les coûts de fabrication de la poutre et boucherait aussi au moins partiellement l'écoulement d'air sur le radiateur.

De plus, lorsque la première paroi de support s'étend entre la pièce de carrosserie et la poutre, la troisième paroi de support s'étend entre la poutre et l'habitacle du véhicule. Elle permet encore un meilleur appui de la deuxième portion sur la poutre et une meilleure reprise des efforts par la poutre. En outre, dans ce cas, la deuxième portion de l'absorbeur s'étend forcément sur toute la dimension transversale de la poutre, ce qui permet également d'améliorer le traitement des chocs,

Enfin, les première et deuxième portions sont de configurations distinctes, ce qui permet de les adapter au mieux aux spécificités de chaque type de choc.

L'absorbeur selon l'invention peut également comprendre l'une ou plusieurs des caractéristiques de la liste suivante :
- les parois de renfort sont agencées de sorte qu'elles s'étendent de chaque côté de la première paroi de support. Le fait que les parois de renfort s'étendent de chaque côté de la première paroi de support signifie que celles-ci s'étendent à la fois en avant de la poutre, lorsque celle-ci est la poutre avant (ou en arrière, lorsque la poutre est la poutre arrière), et en superposition relativement à celle-ci, ce qui offre à la deuxième portion une plus grande résistance à l'effort grâce à la reprise d'effort par la partie supérieure (respectivement inférieure) de la poutre via la deuxième portion,
- la deuxième portion comprend l'un ou l'autre des éléments de la liste suivante:
   ▪ au moins un corps creux,
   ▪ un réseau de nervures,
   ▪ au moins une paroi formant une alternance de saillies et de dépressions.
   Dans ce cas, la deuxième portion peut être conformée pour former un damier, c'est-à-dire une alternance de saillies et de dépressions formées par une suite de parallélépipèdes dépourvus de deux parois, un parallélépipède auquel manquent les parois avant et supérieure étant placé en alternance avec un parallélépipède auquel manquent les parois arrière et inférieure. Elle peut également être conformée de sorte que les extrémités libres avant et arrière des parois de renfort, formant nervures en saillies de la deuxième paroi de support, sont reliés par des parois s'étendant selon la direction longitudinale de l'absorbeur ou que l'extrémité des parois de renfort opposées à l'extrémité liée à la deuxième paroi de support soient également liées par une paroi essentiellement parallèle à la deuxième paroi de support. La deuxième portion peut encore comprendre des nervures additionnelles s'étendant entre les parois de renforts,
- la première portion comprend l'un ou l'autre des éléments de la liste suivante :
   ▪ un réseau de nervures, en particulier ondulées,
   ▪ au moins un corps creux,
   ▪ au moins une paroi formant une alternance de saillies et de dépressions.
   La première portion peut comprendre une paroi en C renforcée de nervures de préférence verticales, ou peut être conformée en damier ou comprendre des nervures s'étendant essentiellement selon la direction longitudinale de l'absorbeur en saillie de la première paroi de support, qui est plane. Toute configuration de la première portion peut être combinée avec toute configuration de la deuxième portion,
- l'absorbeur comprend une portion supplémentaire s'étendant au-dessus des première et deuxième portions, lorsque l'absorbeur est monté sur le véhicule, et comprenant de préférence l'un ou plusieurs des éléments de la iste suivante :
   ▪ un renfort pour peau de pare-chocs, également désigné par « softnose »,
   ▪ un absorbeur de choc convenant pour le choc hanche avec un piéton,
   ▪ un support pour une grille d'entrée d'air,
   ▪ une butée de fermeture du capot.
   Lorsque cette portion est reliée à la deuxième portion de l'absorbeur, elle permet d'augmenter la rigidité de la deuxième portion dont l'extrémité supérieure n'est plus libre. En outre, l'absorbeur forme un module comprenant des éléments installés dans l'état de la technique de façon indépendante sur le véhicule. Ces éléments sont donc montés en une seule fois sur la caisse du véhicule et le temps de montage sur la chaîne principale est diminué, ce qui permet de diminuer les coûts de fabrication,
- l'absorbeur comprend une portion supplémentaire située en-dessous des première et deuxième portions, comprenant deux montants essentiellement perpendiculaires à la direction longitudinale de l'absorbeur, de préférence reliés à leur extrémité opposée à la première portion par un barreau s'étendant essentiellement selon la direction longitudinale de l'absorbeur, le barreau constituant notamment un absorbeur de choc pour piéton ou un appui pour traiter un choc du véhicule avec une jambe de piéton. De même que précédemment, un tel absorbeur forme un module permettant de diminuer encore les coûts de montage sur le véhicule,
- l'absorbeur comprend, selon sa direction longitudinale, une partie centrale et deux parties latérales, ainsi que des moyens de fixation amovible de chaque partie latérale avec la partie centrale. Les deux parties latérales de l'absorbeur peuvent être utilisées pour le traitement du choc coin, c'est à dire un impact effectué à vitesse réduite sur un coin du véhicule, selon un angle non nul relativement à la direction longitudinale du véhicule (pour la norme US 581, 1,5 mile/h soit 2,5 km/h et 60°), ou encore un impact selon le nouveau choc coin défini par le test « RCAR bumper test », soit un impact à 5 km/h avec une recouvrement de 15% entre la barrière et le véhicule. Le traitement d'un tel choc par le véhicule est testé dans certains pays seulement, tels que les Etats-Unis. Le fait que les parties latérales de l'absorbeur soient amovibles permet donc d'ajouter au véhicule des absorbeurs conformés pour le choc coin seulement sur les véhicules pour lesquels cela est nécessaire. Un tel absorbeur permet donc un traitement du choc coin économique tout en garantissant une gestion facile de la mise en place des absorbeurs sur les différents types de véhicule,
- la deuxième portion s'étend, selon la direction longitudinale de l'absorbeur, sur une partie seulement de la dimension de la première portion. Cela peut en effet suffire pour assurer une bonne réponse du véhicule au choc tout en permettant d'économiser la matière permettant la fabrication de l'absorbeur et, de ce fait, de diminuer encore les coûts de fabrication de l'absorbeur,
- la première portion comprend une paroi conformée en C agencée pour que sa concavité soit tournée vers la poutre lorsque l'absorbeur est monté sur la poutre, au moins une extrémité de cette paroi formant première paroi de support,
- la deuxième portion est en retrait selon une direction normale à la première paroi de support relativement à la première portion lorsque l'absorbeur est monté sur la poutre. Autrement dit, lorsque l'absorbeur est monté sur la poutre et que l'on regarde celle-ci depuis l'extérieur du véhicule (l'avant du véhicule lorsque l'absorbeur est placé sur la poutre avant du véhicule), la deuxième portion forme un décrochement relativement au reste de l'absorbeur,
- l'absorbeur est réalisé au moins partiellement en un matériau thermoplastique, tel que le polypropylène (PP), le polyéthylène (PE) ou le polyamide (PA), ou en un matériau thermodurcissable, le matériau étant de préférence chargé de fibres.

L'invention a également pour objet un ensemble d'une poutre de véhicule et d'un absorbeur selon l'invention, la deuxième portion étant située au-dessus ou en-dessous de la poutre, la direction longitudinale de l'absorbeur correspondant à la direction longitudinale de la poutre, et les parois de renfort s'étendant selon la direction transversale de la poutre.

L'ensemble est destiné à être intercalé entre une peau de pare-chocs et la structure du véhicule
De préférence, dans un tel ensemble, la deuxième paroi de support recouvre la paroi supérieure ou inférieure de la poutre, sur toute sa dimension transversale, ce qui permet d'améliorer la reprise des efforts sur la poutre.

Optionnellement, l'absorbeur comprend une partie centrale et deux parties latérales, la partie centrale étant de même dimension longitudinale que la poutre.

Par « partie latérale », on entend une pièce distincte de la partie centrale et pouvant éventuellement être rapportée sur celle-ci mais il est bien entendu que l'absorbeur peut également comprendre une partie centrale ayant une certaine configuration et des parties d'extrémité venues de matière avec cette partie centrale mais présentant une configuration distincte de celle de la partie centrale. De telles parties d'extrémité peuvent être placées en face ou non de la poutre.

L'invention a également pour objet un véhicule comprenant un tel ensemble.

L'invention sera mieux comprise à la lecture de la description qui va suivre, donnée uniquement à titre d'exemple et faite en se référant aux dessins dans lesquels :
- la figure 1 est une vue en perspective de face d'un absorbeur,
- la figure 2 est une vue en coupe selon A-A de l'absorbeur de la figure 1, lorsqu'il est monté sur une poutre de véhicule,
- la figure 3 est une vue en perspective de face d'un absorbeur selon un premier mode de réalisation de l'invention,
- la figure 4 est une vue en coupe selon B-B de l'absorbeur de la figure 3, lorsqu'il est monté sur une poutre de véhicule,
- la figure 5 est une vue en perspective de face d'un absorbeur,
- la figure 6 est une vue en coupe selon C-C de l'absorbeur de la figure 5, lorsqu'il est monté sur une poutre de véhicule,
- la figure 7 est une représentation schématique en perspective d'un absorbeur selon un autre mode de réalisation de l'invention,
- la figure 8 est une représentation schématique en perspective d'un absorbeur selon encore un autre mode de réalisation de l'invention.

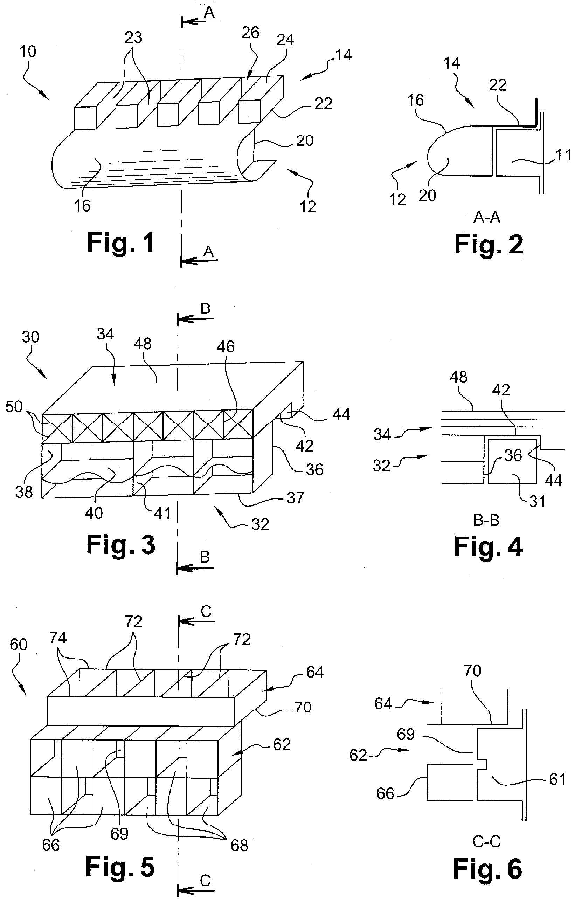

On a représenté sur la figure 1 un absorbeur 10. L'absorbeur est destiné à être monté sur une poutre 11 avant de véhicule. Cette poutre est réalisée en un matériau métallique et configurée à l'aide de deux profilés, un profilé en U et un profilé plat, formant un corps creux, comme cela est plus particulièrement visible sur la figure 2.

L'absorbeur s'étend essentiellement selon une direction longitudinale correspondant à la direction longitudinale de la poutre 11 lorsqu'il est monté sur celle-ci et correspondant également à la direction transversale du véhicule.

L'absorbeur 10 comprend une première et une deuxième portion superposées 12, 14, ces deux portions étant de configuration distinctes. La première portion 12 forme la portion inférieure de l'absorbeur et la deuxième portion 14 forme la portion supérieure de celui-ci.

Comme on le voit sur la figure 1, la première portion 12 comprend une paroi en forme de C 16 dont la concavité est tournée vers la poutre 11 du véhicule lorsque l'absorbeur est monté sur celle-ci. Des nervures verticales 20 s'étendent essentiellement perpendiculairement à la direction longitudinale de l'absorbeur entre les deux branches de la paroi 16 de façon à réunir celle-ci sur toute la dimension transversale de sa branche inférieure.

Comme on le voit sur la figure 2, l'extrémité inférieure de la paroi 16 et l'extrémité libre des nervures 20 sont destinées à s'appuyer sur une face avant de la poutre 11 lorsque l'absorbeur est monté sur la poutre du véhicule, cette poutre étant composée de deux profilés assemblés, comme on le voit sur la figure 2. L'extrémité inférieure de la paroi 16 et les extrémités libres des nervures forment des premières parois de support de l'absorbeur sur la poutre 11.

La deuxième portion 14 comprend une paroi inférieure 22 prolongeant la branche supérieure de la paroi en C 16. L'absorbeur est conformé de sorte que cette paroi soit en appui sur une face supérieure de la poutre 11 lorsque l'absorbeur est monté sur la poutre. Cette paroi 22 est essentiellement normale aux premières parois de support et constitue une deuxième paroi de support de l'absorbeur sur la poutre. La deuxième portion est conformée de sorte que la paroi recouvre toute la face supérieure de la poutre sur toute la dimension transversale de celle-ci.

La deuxième portion comprend également des parois de renfort 23 verticales et s'étendant essentiellement perpendiculairement à la direction longitudinale de l'absorbeur. Chaque paroi de renfort verticale 23 comprend une extrémité inférieure reliée à la deuxième paroi de support 22.

La deuxième portion est plus particulièrement conformée de façon à former un damier. Elle comprend une alternance de saillies 24 et de dépressions 26. Pour former les saillies, deux parois de renfort 23 adjacentes sont reliées par leur extrémité avant et par leur extrémité supérieure. La paroi inférieure 22 comprend un évidement entre les parois 23 formant la saillie, de sorte que la saillie 23 ne comporte pas de paroi inférieure. Pour former les dépressions, deux parois de renfort adjacentes sont reliées par leur extrémité arrière et par la paroi inférieure 22.

La deuxième portion est en retrait relativement à la première portion. En particulier, la deuxième portion est située au-dessus de la poutre alors que la première partie est située en avant de celle-ci et les deux portions ne se chevauchent pas selon la direction transversale de l'absorbeur.

On va maintenant décrire un absorbeur selon un premier mode de réalisation de l'invention, à l'aide des figures 3 et 4.

Cet absorbeur 30 comprend également une première et une deuxième portions 32, 34 superposées. Il est également destiné à être monté sur une poutre 31 de véhicule constituée par un profilé métallique de forme essentiellement parallélépipédique.

La première portion 32 est conformée de façon à présenter une section transversale en U dont la concavité est tournée vers l'extérieur et plus particulièrement la peau de pare-chocs de véhicule lorsque l'absorbeur est monté sur le véhicule. L'absorbeur comprend plus particulièrement une paroi de fond 36 et deux branches latérales 37, respectivement supérieure et inférieure, s'étendant horizontalement en saillie de la paroi de fond vers la peau de pare-chocs du véhicule et selon la direction longitudinale de l'absorbeur.

La paroi de fond 36 est plane et verticale. Elle est agencée pour s'étendre selon la direction longitudinale de l'absorbeur. Cette paroi 36 forme une première paroi de support de l'absorbeur sur la poutre 31. Les branches latérales 37 sont essentiellement perpendiculaires à la paroi de fond 36.

La première portion comprend également des nervures verticales 38 s'étendant selon la direction verticale et reliant les deux branches supérieures et inférieures ainsi que la paroi de fond 36 du U. Elle comprend également une nervure horizontale 40 s'étendant en saillie de la paroi de fond, selon la direction longitudinale de l'absorbeur, essentiellement parallèlement aux branches latérales 37, qui sont rectilignes dans cet exemple. L'extrémité libre de cette nervure présente des ondulations.

La première portion présente également des nervures verticales 41 reliant la paroi de fond 36, les deux branches latérales 37 et la nervure 40. La première portion est donc constituée par un réseau de nervures.

La deuxième portion 34 comprend une paroi inférieure 42 confondue avec la branche supérieure du U et s'étendant dans le prolongement de celle-ci. La partie de la paroi 42 prolongeant la branche du U forme une deuxième paroi de support de l'absorbeur, destinée à être placée en appui sur une paroi supérieure de la poutre. La paroi 42 recouvre toute la face supérieure de la poutre .

La paroi inférieure 42 présente également un décrochement dans sa partie arrière, de sorte qu'elle comprend une saillie s'étendant vers le bas, en arrière de la poutre. De ce fait, au niveau du décrochement, la paroi 42 comprend une partie 44 s'étendant essentiellement parallèlement à la première paroi de support 36 en arrière de celle-ci. Cette partie 44 forme une troisième paroi de support de l'absorbeur sur la poutre en appui sur la paroi arrière de la poutre lorsque l'absorbeur est mis en place sur celle-ci. Les parois 36, 42 et 44 délimitent un logement pour la poutre 31.

La deuxième portion comprend également des nervures verticales formant des parois de renfort 46 s'étendant selon la direction transversale de l'absorbeur, en saillie de la paroi 42 sur toute la longueur de celle-ci, de l'extrémité libre de la branche supérieure du U à l'extrémité arrière de celle-ci. Ces nervures 46 s'étendent ainsi des deux côtés de la première paroi de support 36. Elles sont en outre conformées de sorte que leur extrémité libre forme une droite horizontale. La hauteur des nervures varie donc au niveau du décrochement 44 de la paroi inférieure.

La deuxième portion 34 comprend également une paroi supérieure plane 48 recouvrant l'extrémité libre des parois de renfort de façon à relier celles-ci entre elles. Elle comprend également des nervures transversales 50 s'étendant entre deux nervures pour relier l'extrémité liée d'une paroi de renfort donnée avec l'extrémité libre des parois de renfort adjacentes. Ces nervures 50 s'étendent de l'extrémité avant de la paroi 42 jusqu'au décrochement de celle-ci. Elles sont inclinées relativement à la deuxième paroi de support et aux parois de renfort.

On va maintenant décrire un autre absorbeur à l'aide des figures 5 et 6. Un tel absorbeur est destiné à être monté sur une poutre 61 constituée par deux profilés métalliques, respectivement plan et en forme de W, ces deux profilés formant un corps creux, représenté sur la figure 2.

Cet absorbeur 60 comprend également une première et une deuxième portions 62, 64 superposées.

La première portion 62 est conformée en damier. Plus particulièrement, elle comprend une paroi constituée par une alternance de saillies 66 et de dépressions 68, à la fois selon la direction longitudinale de l'absorbeur et selon la direction verticale de celui-ci. Les saillies 66 et dépressions sont plus particulièrement disposées en quinconce de sorte qu'une saillie 66 donnée est entourée de dépressions, à la fois selon la direction longitudinale et verticale de l'absorbeur.

Chaque dépression 68 comprend une paroi de fond 69 plane formant une première paroi de support de l'absorbeur sur la poutre et agencée pour être en appui contre la face avant de la poutre lorsque l'absorbeur est monté sur la poutre.

La deuxième portion 64 de l'absorbeur 60 comprend une paroi inférieure 70 confondue en partie avec la paroi supérieure de la première portion 62 et s'étendant vers l'arrière dans le prolongement de celle-ci. La partie 70 de la paroi située dans le prolongement de la première portion forme une deuxième paroi de support de l'absorbeur et est agencée pour prendre appui sur la face supérieure de la poutre. Elle ne recouvre pas cette fois la poutre sur toute la dimension transversale de celle-ci.

La deuxième portion 64 comprend également des nervures 72 verticales s'étendant selon la direction transversale de l'absorbeur, en saillie de la paroi 70. Ces nervures forment des parois de renfort de l'absorbeur. Les extrémités avant et arrière des parois de renfort 72 sont en outre reliées entre elles par des nervures verticales 74 s'étendant également en saillie de la paroi 66, selon la direction longitudinale de l'absorbeur. La deuxième portion est donc conformée comme un réseau de nervures.

La nervure 74 située en avant des parois de renfort 72 s'étend en avant relativement à la première paroi de support mais en retrait relativement à l'avant de la première portion. La nervure 74 située à l'arrière des parois de renfort 72 s'étend à l'extrémité arrière de la paroi 66. Les parois de renfort 72 s'étendent donc de chaque côté de la première paroi de support 69, plus particulièrement en avant et en arrière de la paroi de support.

Dans tous les absorbeurs décrits ci-dessus, la première portion est destinée à résister à un choc piéton et à des chocs urbains, et la deuxième portion est destinée à résister à un choc contre une barrière située à une hauteur donnée On notera que la 1^{re} portion est aussi susceptible d'être sollicitée dans le cas d'un choc contre la barrière. La configuration et l'épaisseur de la deuxième portion lui permettent d'être plus rigide que la première portion de l'absorbeur et d'absorber efficacement le choc malgré l'absence de la poutre en regard de cette portion.

Chacun des absorbeurs est réalisé en un matériau thermoplastique tel que le polypropylène et renforcé de fibres. Les première et deuxième portions sont venues de moulage et l'absorbeur peut également comprendre des inserts métalliques notamment mis en place dans les parois de renfort de la deuxième portion.

Ces absorbeurs sont réalisées par moulage de la matière thermoplastique, notamment par injection, et de ce fait, les première et deuxième portions de l'absorbeur sont venues de moulage.

On va maintenant décrire un absorbeur selon un autre mode de réalisation de l'invention.

Un tel absorbeur 80 comprend également une première portion 82 apte à être placée en regard de la poutre de chocs du véhicule automobile, celle-ci pouvant présenter une des configurations décrite ci-dessus, par exemple configurée comme un réseau de nervures, comme une paroi en C, ou en damier.

Il comprend également une deuxième portion 84 s'étendant au-dessus de la première portion 82 et comprenant une paroi faisant saillie vers l'arrière relativement à la première portion de façon à pouvoir prendre appui sur la face supérieure de la poutre. La deuxième portion 84 s'étend sur une partie de la dimension longitudinale de la première portion, et est agencée en partie centrale de la première portion selon la direction longitudinale de celle-ci. Elle peut également prendre l'une ou l'autre des configurations décrites plus haut, par exemple en damier ou comme un réseau de nervures.

La deuxième portion 84 est reliée à une troisième portion 86 s'étendant au-dessus de celle-ci et de la première portion et ayant une forme trapézoïdale de petit côté correspondant à l'extrémité supérieure de la deuxième portion 84. Cette portion s'étend essentiellement verticalement, et est légèrement inclinée vers l'arrière à son extrémité supérieure pour suivre le contour du véhicule.

Cette troisième portion 86 forme une armature formant renfort de la peau de pare-chocs apte à porter un absorbeur permettant d'absorber un choc hanche avec un piéton. L'armature 86 peut également être conformée pour remplir elle-même cette fonction d'absorption d'un choc hanche avec un piéton, du fait du matériau dans lequel elle est réalisée et de sa configuration.

Elle comprend également un support 88 pour une grille d'entrée d'air, comprenant un orifice de forme adaptée pour accueillir une grille et ménagée à la hauteur adaptée pour recevoir celle-ci, ainsi qu'à une extrémité supérieure de celle-ci, une butée 90 pour la fermeture du capot. Cette troisième portion peut également comprendre toutes les fonctions présentes classiquement sur une face avant technique.

L'absorbeur comprend également une quatrième portion 92, constituant la portion inférieure de celui-ci et solidaire de la première portion. Cette portion est donc située en-dessous des première et deuxième portions. Cette quatrième portion comprend deux montants 94 s'étendant verticalement et vers le bas lorsque l'absorbeur est monté sur le véhicule. Ces montants sont agencés aux extrémités de la première portion selon la direction longitudinale de celle-ci. Ils ont une fonction d'absorption d'énergie et améliorent la compatibilité véhicule-véhicule lors d'un choc.

La quatrième portion comprend également un barreau 96 s'étendant selon la direction longitudinale de l'absorbeur, parallèlement à la première portion. Ce barreau est agencé à l'extrémité libre des jambages 94. Il peut être agencé de façon à être placé à la hauteur du genou d'un piéton et est conformé de façon à former un absorbeur d'énergie voie basse pour choc piéton.

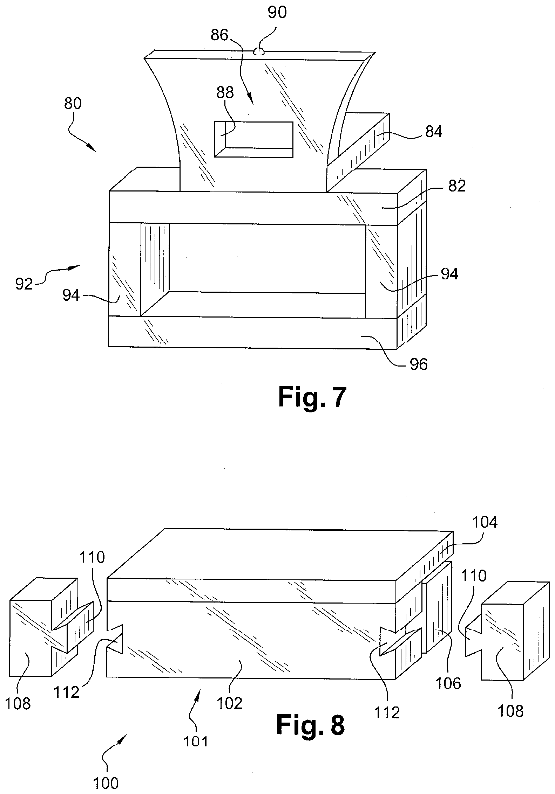

Les jambages 94 et le barreau 96, ainsi que l'armature, peuvent être conformés pour former un réseau de nervures ou en damier de façon à absorber de façon appropriée l'énergie du choc. La représentation de la figure 7 n'est en tout cas pas réaliste et ne sert qu'à montrer le contour externe de l'absorbeur lorsqu'il comprend les troisième et quatrième portions 86, 92.

Un tel absorbeur est particulièrement avantageux car il forme un module présentant une pluralité de fonctions et peut être mis en place sur la caisse du véhicule en une seule fois, ce qui permet de diminuer les coûts de fabrication, ainsi que les coûts de réparation suite à un choc.

On a représenté sur la figure 8 une variante d'un absorbeur selon un mode de réalisation de l'invention.

Cet absorbeur 100 comprend une partie centrale 101 comprenant une première portion 102 et une deuxième portion 104 qui peuvent être configurées comme les premières et deuxième portions présentées aux figures 1 à 6. La partie centrale 101 présente essentiellement la même dimension longitudinale que la poutre 106 sur laquelle elle est placée.

Il comprend également deux parties latérales 108 permettant de prolonger la première portion 102 de l'absorbeur selon la direction longitudinale de celui-ci. Ces parties latérales 108 sont aptes à être reliées à la partie centrale de l'absorbeur par coopération de formes, à l'aide d'éléments d'encliquetages de forme complémentaires.

Ces parties latérales peuvent être de même configuration que la portion centrale ou de configuration différente. Elles peuvent notamment être configurées en un réseau de nervures ou en damier.

Comme on le voit plus précisément sur la figure 8, chaque partie latérale 108 présente une saillie 110 faisant saillie relativement à l'absorbeur selon une direction longitudinale de celui-ci et s'étendant selon la direction transversale de l'absorbeur, sur une face latérale de la partie latérale 108. Cette saillie 110 est de section trapézoïdale et l'extrémité liée au reste de la partie latérale correspond au petit côté de ce trapèze.

La première portion 102 de la partie centrale 101 comprend également, sur chacune de ces faces latérales, une dépression 112 de forme complémentaire de celle de la saillie 110.

La coopération des saillies 110 avec les dépressions 112 permet de solidariser de façon amovible la partie centrale 101 et les parties latérales 108 de façon à prolonger l'absorbeur si cela est nécessaire.

Les parties latérales 108 de l'absorbeur permettent notamment au véhicule de remplir le cahier des charges en matière de choc coin, c'est à dire un impact du coin du véhicule contre un poteau. La réponse du véhicule à un tel choc n'est testé que dans certains pays et il est donc avantageux que les parties latérales soient amovibles de sorte que les véhicules destinés à certains pays effectuant ce test en soient munis, sans que pour autant tous les véhicules en soient munis.

On notera que l'absorbeur n'est pas limité aux modes de réalisation précédemment décrits.

L'absorbeur peut être réalisé en un autre matériau que ceux décrits, par exemple en un matériau thermodurcissable, tel que le SMC (Sheet Moulding Compound). L'absorbeur peut ne pas comprendre de renforts métalliques.

En outre, sa forme n'est pas limitée aux formes décrites. L'absorbeur peut par exemple comprendre, en plus des première et deuxième portions, uniquement une troisième ou une quatrième portion. La forme de la troisième portion peut également être différente de ce qui a été décrit. Celle-ci peut par exemple être moins haute que l'armature décrite et ne pas comprendre de butée pour capot. Elle peut également s'étendre sur toute la longueur de la première portion, notamment lorsque la deuxième portion s'étend sur toute la longueur de la première portion.

De même, la forme de la quatrième portion n'est pas limitée à ce qui a été décrit. Elle peut comprendre des montants verticaux qui ne s'étendent pas depuis les extrémités de la première portion, par exemple.

En outre, l'absorbeur peut ne pas être entièrement en appui contre la poutre, notamment dans le cas où il présente des parties latérales qui elles ne sont pas en appui contre la poutre. L'absorbeur peut effectivement être configuré de façon à être plus long que la poutre et ne pas comprendre de parties latérales amovibles. Un tel absorbeur peut toutefois permettre d'absorber un choc coin selon sa longueur.

L'absorbeur peut également être de dimension longitudinale inférieure à celle de la poutre.

Lorsque l'absorbeur comprend des parties latérales, celles-ci peuvent également être de hauteur supérieure à la hauteur de la première portion. Elles peuvent aussi être assemblées à la première portion à l'aide d'autres moyens que ceux décrits, par exemple à l'aide de saillies et dépressions de forme différentes de celles décrites ou par des moyens par vissage par exemple. De tels moyens peuvent également être utilisés en complément des moyens de solidarisation par encliquetage.

De plus, la configuration de chacune des première et deuxième portions peut être distincte de ce qui a été décrit, tant que ces portions sont adaptées à absorber le choc pour lequel elles sont prévues. Les première et deuxième portions peuvent également avoir une configuration identique.

Toute configuration décrite de la première portion peut être combinée avec toute configuration décrite de la deuxième portion.

La deuxième portion peut aussi être positionnée en retrait de la première portion ou non quelque soit la configuration de la première portion.

Ces deux portions de l'absorbeur peuvent également comprendre une pluralité de corps creux. L'absorbeur peut par exemple pour ce faire comprendre des parties rapportées sur les parois de support des première et deuxième parties.

En outre, un absorbeur tel que décrit peut être mis en place sur une poutre avant ou arrière du véhicule.

On notera également que la première et la deuxième portions peuvent être inversées, en fonction de la nature du véhicule, c'est-à-dire que la deuxième portion peut se trouver au-dessous de la première portion. Cela est particulièrement indiqué dans le cas des grands véhicules de type SUV ou 4x4, qui comprendraient alors une poutre de hauteur supérieure à celle de la barrière utilisée pour le test « RCAR bumper type ».

## Revendications

1. Absorbeur de choc (30 ; 80 ; 100) pour véhicule, destiné à être intercalé entre une peau de pare-chocs et une poutre transversale de véhicule de sorte que sa direction longitudinale corresponde à la direction transversale du véhicule, l'absorbeur comprenant au moins une première et une deuxième portions d'absorption ayant des configurations distinctes en fonction de différents types de chocs ( 32, 34 ; 82, 84), superposées et solidaires entre elles, l'absorbeur étant réalisé au moins partiellement en matière plastique, dans lequel
- la première portion comprend au moins une première paroi de support ( 36) apte à être placée en appui contre une paroi verticale de la poutre du véhicule (31), lorsque l'absorbeur est monté contre la poutre,
- la deuxième portion comprend au moins une deuxième paroi de support (42), s'étendant essentiellement sur toute la dimension longitudinale de l'absorbeur et essentiellement perpendiculairement à la première paroi, apte à être placée en appui contre une paroi horizontale de la poutre lorsque l'absorbeur est monté contre la poutre,
- la deuxième portion comprend une pluralité de parois de renfort (23 ; 46 ; 72) correspondant essentiellement à un plan normal à la direction longitudinale de l'absorbeur,
- les parois de renforts sont agencées de sorte qu'elles comprennent chacune une première extrémité liée à la deuxième paroi, chaque paroi de renfort comprenant au moins une extrémité, de préférence deux extrémité, distincte de la première extrémité et reliée à une paroi de renfort adjacente, de sorte que chaque paroi de renfort est reliée à chacune des parois adjacentes,
**caractérisé en ce que** la deuxième portion comprend une troisième paroi de support (44) essentiellement parallèle à la première paroi et non coplanaire avec la première paroi, les parois de support définissant un logement pour la poutre.

2. Absorbeur selon la revendication 1, dans lequel la première et/ou deuxième portion comprennent l'un ou l'autre des éléments de la liste suivante:
- au moins un corps creux,
- un réseau de nervures (46 -50 ; 37-41 ; 72 - 74),
- au moins une paroi formant une alternance de saillies (24 ; 66) et de dépressions (26 ; 68) .

3. Absorbeur selon l'une quelconque des revendications précédentes, comprenant une portion supplémentaire (86) située au-dessus des première et deuxième portions (82, 84) lorsque l'absorbeur est monté contre la poutre, la portion supplémentaire formant une armature comprenant de préférence l'un ou plusieurs des éléments de la liste suivante :
- un renfort de peau de pare-chocs,
- un absorbeur de chocs convenant pour le choc hanche avec un piéton,
- un support pour une grille d'entrée d'air (88),
- une butée de fermeture du capot (90).

4. Absorbeur selon l'une quelconque des revendications précédentes, comprenant une portion supplémentaire (92) située en-dessous des première et deuxième portions (82, 84) lorsque l'absorbeur est monté contre la poutre, la portion supplémentaire comprenant deux montants (94) essentiellement perpendiculaires à la direction longitudinale de l'absorbeur, de préférence reliés à leur extrémité opposée à la première portion par un barreau (96) s'étendant essentiellement selon la direction longitudinale de l'absorbeur, le barreau constituant notamment un absorbeur de chocs ou un appui pour traiter un choc avec une jambe de piéton.

5. Absorbeur selon l'une quelconque des revendications précédentes, dans lequel la deuxième portion (84) s'étend, selon la direction longitudinale de l'absorbeur, sur une partie seulement de la dimension de la première portion.

6. Absorbeur selon l'une quelconque des revendications précédentes, comprenant, selon sa direction longitudinale, une partie centrale (101) et deux parties latérales (108), ainsi que des moyens de fixation amovible (110, 112) de chaque partie latérale avec la partie centrale.

7. Absorbeur selon l'une quelconque des revendications précédentes, réalisé au moins partiellement en un matériau thermoplastique, tel que le polypropylène (PP), le polyéthylène (PE) ou le polyamide (PA), ou en un matériau thermodurcissable, de préférence chargé de fibres.

8. Ensemble d'une poutre (11 ; 31 ; 61) de véhicule et d'un absorbeur selon l'une quelconque des revendications précédentes, destiné à être intercalé entre une peau de pare-chocs et la structure du véhicule, **caractérisé en ce que** la deuxième portion est située au-dessus ou en-dessous de la poutre, la direction longitudinale de l'absorbeur correspondant à la direction longitudinale de la poutre, les parois de renfort s'étendant selon la direction transversale de la poutre.

9. Ensemble selon la revendication précédente, dans lequel la deuxième paroi de support recouvre la paroi supérieure ou inférieure de la poutre, sur toute la dimension transversale de la poutre.

10. Véhicule automobile comprenant un ensemble selon l'une quelconque des revendications 8 et 9.

## Patentansprüche

1. Aufpralldämpfer (30, 80, 100) für ein Fahrzeug, der dazu bestimmt ist, zwischen einer Stoßfängerhaut und einem Querträger für ein Fahrzeug so eingesetzt zu werden, dass seine Längsrichtung der Querrichtung des Fahrzeugs entspricht,
wobei der Dämpfer wenigstens einen ersten und einen zweiten Dämpferteil mit Ausgestaltungen, die in Abhängigkeit von verschiedenen Aufpralltypen (32, 34, 82, 84) verschieden sind, umfasst, die übereinandergelegt sind und fest miteinander verbunden sind, wobei der Dämpfer wenigstens teilweise aus Kunststoff realisiert ist, wobei
der erste Teil wenigstens eine erste Trägerwand (36) umfasst, die imstande ist, in Abstützung gegen eine vertikale Wand des Trägers des Fahrzeugs (31) platziert zu werden, wenn der Dämpfer gegen den Träger montiert ist,
der zweite Teil wenigstens eine zweite Trägerwand (42) umfasst, die sich im Wesentlichen über die gesamte Längsausdehnung des Dämpfers und im Wesentlichen senkrecht zu der ersten Wand erstreckt und imstande ist, in Abstützung gegen eine horizontale Wand des Trägers platziert zu werden, wenn der Dämpfer gegen den Träger montiert ist,
- der zweite Teil eine Mehrzahl von Verstärkungswänden (23, 46, 72) umfasst, die im Wesentlichen einer zu der Längsrichtung des Dämpfers normalen Ebene entsprechen,
- die Verstärkungswände so vorgesehen sind, dass sie jede ein erste Ende umfassen, das mit der zweiten Wand verbunden ist, wobei jede Verstärkungswand wenigstens ein Ende, vorzugsweise zwei Enden, umfasst, das von dem ersten Ende verschieden ist und mit einer angrenzenden Verstärkungswand so verbunden ist, dass jede Verstärkungswand mit jeder der angrenzenden Wände verbunden ist,
**dadurch gekennzeichnet, dass** der zweite Teil eine dritte Trägerwand (44) umfasst, die im Wesentlichen zu der ersten Wand parallel ist und mit der ersten Wand nicht koplanar ist, wobei die Trägerwände eine Aufnahme für den Träger definieren.

2. Dämpfer nach Anspruch 1, wobei der erste und/oder zweite Teil das eine oder das andere der Elemente aus der folgenden Liste umfassen:
- wenigstens einen Hohlkörper,
- ein Netz aus Rippen (46-50, 37-41, 72-74), wobei wenigstens eine Wand abwechselnd Vorsprünge (24, 66) und Vertiefungen (26, 68) bildet.

3. Dämpfer nach einem der vorhergehenden Ansprüche, umfassend einen weiteren Teil (86), der sich oberhalb des ersten und zweiten Teils (82, 84) befindet, wenn der Dämpfer gegen den Träger montiert ist, wobei der weitere Teil eine Armierung bildet, die vorzugsweise das eine oder mehrere Elemente aus der folgenden Liste umfasst:
eine Stoßfängerhautverstärkung,
einen für den Hüftzusammenprall mit einem Fußgänger geeigneten Aufpralldämpfer,
einen Träger für ein Lufteinlassgitter (88),
einen Schliessanschlag der Motorhaube (90).

4. Dämpfer nach einem der vorhergehenden Ansprüche, umfassend einen weiteren Teil (92), der sich unterhalb des ersten und zweiten Teils (82, 84) befindet, wenn der Dämpfer gegen den Träger montiert ist, wobei der weitere Teil zwei Holme (94) umfasst, die zu der Längsrichtung des Dämpfers im Wesentlichen senkrecht sind und vorzugsweise an ihrem dem ersten Teil gegenüberliegenden Ende durch einen Steg (96) verbunden sind, der sich im Wesentlichen in der Längsrichtung des Dämpfers erstreckt, wobei der Steg insbesondere einen Aufpralldämpfer oder eine Abstützung bildet, um einen Zusammenprall mit einem Fußgängerbein zu verarbeiten.

5. Dämpfer nach einem der vorhergehenden Ansprüche, wobei der zweite Teil (84) sich in der Längsrichtung des Dämpfers, über nur einen Teil der Ausdehnung des ersten Teils erstreckt.

6. Dämpfer nach einem der vorhergehenden Ansprüche, umfassend in seiner Längsrichtung einen mittigen Teil (101) und zwei seitliche Teile (108) sowie Mittel zur lösbaren Befestigung (110, 112) jedes seitlichen Teils mit dem mittigen Teil.

7. Dämpfer nach einem der vorhergehenden Ansprüche, realisiert wenigstens teilweise aus einem thermoplastischen Material, wie Polypropylen (PP), Polyethylen (Polyethylen) oder Polyamid (PA), oder aus einem duroplastischen Material, vorzugsweise mit Fasern gefüllt.

8. Anordnung aus einem Träger (11, 31, 61) für ein Fahrzeug und einem Dämpfer nach einem der vorhergehenden Ansprüche, die dazu bestimmt ist, zwischen einer Stoßfängerhaut und der Struktur des Fahrzeugs eingesetzt zu werden, **dadurch gekennzeichnet, dass** der zweite Teil sich oberhalb oder unterhalb des Trägers befindet, wobei die Längsrichtung des Dämpfers der Längsrichtung der Trägers entspricht, wobei die Verstärkungswände sich in der Querrichtung des Trägers erstrecken.

9. Anordnung nach dem vorhergehenden Anspruch, wobei die zweite Trägerwand die obere oder untere Wand des Trägers bedeckt, über die gesamte Querausdehnung des Trägers.

10. Kraftfahrzeug, umfassend eine Anordnung nach einem der Ansprüche 8 und 9.

## Claims

1. A vehicle impact absorber (30, 80, 100) designed to be interposed between a bumper skin and a transverse vehicle beam so that the longitudinal direction of the absorber corresponds to the transverse direction of the vehicle, the absorber comprises at least first and second absorption portions of distinct configurations depending on the different types of impacts (32, 34, 82, 84), superposed and secured to each other, the absorber being made at least in part out of plastics material, in which:
• the first portion comprises at least a first support wall (36) suitable for being placed to bear against a vertical wall of the vehicle beam (31) when the absorber is mounted against the beam,
• the second portion includes at least a second support wall (42) extending essentially over the entire longitudinal dimension of the absorber and essentially perpendicularly to the first wall, suitable for being placed to bear against a horizontal wall of the beam when the absorber is mounted against the beam,
• the second portion includes a plurality of reinforcing walls (23, 46, 72) corresponding essentially to a plane normal to the longitudinal direction of the absorber,
• the reinforcing walls are arranged in such a manner that each of them has a first end connected to the second wall, each reinforcing wall including at least one end and preferably two ends, distinct from the first end and connected to an adjacent reinforcing wall, such that each reinforcing wall is connected to each of the adjacent walls,
**characterized in that** the second portion includes a third support wall (44) that is essentially parallel to the first wall and not coplanar with the first wall, the support walls defining a housing for the beam.

2. An absorber according to claim 1, wherein either or both of the first and second portions comprise elements from the following list:
• at least one hollow body;
• an array of ribs (46-50, 37-41, 72-74); and
• at least one wall forming alternating projections (24, 66) and depressions (26, 68).

3. An absorber according to any preceding claim, including an additional portion situated above the first and second portions (82, 84) when the absorber is mounted against the beam, the additional portion forming a strength member preferably comprising one or more of the elements from the following list:
• bumper skin reinforcement,
• an impact absorber suitable for a hip impact against a pedestrian,
• a support (88) for an air inlet grille; and
• a hood closure abutment (90).

4. An absorber according to any preceding claim, including an additional portion (92) situated beneath the first and second portions (82, 84) when the absorber is mounted against the beam, the additional portion having two uprights (94) essentially perpendicular to the longitudinal direction of the absorber, preferably connected together at their ends remote from the first portion by a bar (96) extending essentially in the longitudinal direction of the absorber, the bar constituting in particular an impact absorber or a bearing surface for handling an impact against a pedestrian's leg.

5. An absorber according to any preceding claim, wherein the second portion (84) extends in the longitudinal direction of the absorber over a fraction only of the dimension of the first portion.

6. An absorber according to any preceding claim, including, in its longitudinal direction, a central portion (101) and two lateral portions (108), together with releasable fastener means (110, 112) for fastening each lateral portion to the central portion.

7. An absorber according to any preceding claim, made at least in part out of thermoplastic material such as polypropylene (PP), polyethylene (PE), or polyamide (PA), or out of a thermosetting material, and preferably fiber-filled.

8. An assembly of a vehicle beam (11, 31, 61) and an absorber according to any preceding claim for interposing between a bumper skin and the structure of a vehicle, the assembly being **characterized in that** the second portion is situated above or below the beam, the longitudinal direction of the absorber corresponding to the longitudinal direction of the beam, the reinforcing walls extending in the transverse direction of the beam.

9. An assembly according to the preceding claim, wherein the second support wall covers the top or bottom wall of the beam over the entire transverse dimension of the beam.

10. A motor vehicle including an assembly according to claim 8 or claim 9.
